# EUROPEAN PATENT APPLICATION

(11) **EP 4 386 293 A1**
(43) Date of publication of application: **19.06.2024**
(21) Application number: 22855211.3
(22) Date of filing: 21.07.2022
(51) Int. Cl.: F25D 23/12, A23L 3/36, A23B 4/06, B65D 81/18, F25D 25/00, F25B 21/00

(54) **MAGNETIC FIELD-BASED FRESH-KEEPING STORAGE CONTAINER AND REFRIGERATOR**

(30) Priority: 11.08.2021 CN 202110919003
(71) Applicant: Qingdao Haier Refrigerator Co., Ltd., Laoshan District Qingdao Shandong 266101 (CN); Haier Smart Home Co., Ltd., Qingdao, Shandong 266101 (CN)
(72) Inventor: MA, Jian, Qingdao, Shandong 266101 (CN); ZHU, Xiaobing, Qingdao, Shandong 266101 (CN); LI, Mengcheng, Qingdao, Shandong 266101 (CN); FEI, Bin, Qingdao, Shandong 266101 (CN); ZHANG, Peng, Qingdao, Shandong 266101 (CN); JI, Lisheng, Qingdao, Shandong 266101 (CN); ZHANG, Yuning, Qingdao, Shandong 266101 (CN); YI, Yao, Qingdao, Shandong 266101 (CN); CAO, Zilin, Qingdao, Shandong 266101 (CN); LI, Tao, Qingdao, Shandong 266101 (CN)
(74) Representative: Winter, Brandl - Partnerschaft mbB
(86) International application number: PCT/CN2022/107163
(87) International publication number: WO 2023/016228

(57) **Abstract**

A magnetic field-based fresh-keeping storage container (200) and a refrigerator (10). The magnetic field-based fresh-keeping storage container (200) comprises: a storage assembly (210), in which a storage space for placing a storage subject is defined; a magnet assembly (220) comprising a first magnet component (221) and a second magnet component (222) respectively disposed on a group of opposite sides of the storage assembly (210), and forming a magnetic field in the storage space using the first magnet component (221) and the second magnet component (222); and a magnetically conductive assembly (230) having a first magnetically conductive member (231) corresponding to the first magnet component (221), a second magnetically conductive member (232) corresponding to the second magnet component (222), and a magnetically conductive connection member (233) connected between the first magnetically conductive member (231) and the second magnetically conductive member (232), the first magnetically conductive member (231), the second magnetically conductive member (232), and the magnetically conductive connection member (233) forming an annular magnetically conductive path outside the storage space. A uniform magnetic field having strength that satisfies the requirement for improving storage quality is formed in the storage space. The container has a compact structure and is easy to mount, and the use requirements for a smart refrigerator are met.

## Description

### TECHNICAL FIELD

The present invention relates to a refrigeration and freezing equipment, and in particular, to a magnetic field fresh-keeping storage container and a refrigerator.

### BACKGROUND

There is increasing attention to the freshness preservation of items stored in refrigerators. Food materials, such as meat, fishes and shrimps, are prone to lose juice to worsen a taste and darken a color during storage. In particular, some high-grade food materials have greatly reduced quality after stored for a period of time.

To improve the quality of storage subjects, several advancements have been introduced in existing technologies. For example, quick freezing to increase the speed of food freezing or to bring the food into a supercooled state. This approach requires enhancing the refrigerator's cooling capacity, leading to increased energy consumption. Therefore, efficiently improving the quality of frozen storage is a pressing technical challenge for refrigerator developers.

Theoretical research has found that magnetic fields significantly influence the formation of ice crystals during the freezing process. The field of refrigeration has actively explored incorporating magnetic fields into fresh-keeping storage. However, the efficacy of magnetic field-assisted preservation in actual refrigerator applications has been less than satisfactory.

### SUMMARY

An object of the present invention is to provide a magnetic field-based fresh-keeping storage container and a refrigerator that effectively improves the quality of storage subj ects.

A further object of the present invention is to reduce component costs and facilitate the installation and application of the magnetic field-based fresh-keeping storage container in refrigerators.

In particular, the present invention is directed to a magnetic field-based fresh-keeping storage container, comprising:
a storage assembly defining a storage space for placing storage subjects;
a magnet assembly having a first magnet component and a second magnet component respectively positioned on a pair of opposite sides of the storage assembly, the first and second magnet components being utilized to form a magnetic field in the storage space;
a magnetic guide assembly, having a first magnetically conductive member correspondingly arranged with the first magnet component, a second magnetically conductive member correspondingly arranged with the second magnet component, and a magnetically conductive connection member connecting between the first and second magnetically conductive members, forming an annular magnetic conduction path outside the storage space with the first magnetically conductive member, the second magnetically conductive member, and the magnetically conductive connection member.

Further, the first and second magnet components each comprises a permanent magnet plate positioned on an exterior side of the corresponding side of the storage assembly, and the shape of the permanent magnet plate is consistent with the shape of its corresponding side; the first and second magnetically conductive members each comprises a magnetic guide plate, respectively set opposite to the permanent magnet plates, and the magnetically conductive connection member extends from the edge of the magnetic guide plate along the exterior of the storage assembly and connects to the magnetic guide plate on the other side.

Further, the projection of the storage space on the plane of the magnetic guide plates lies within the range of the magnetic guide plates, and the size of the permanent magnet plates is smaller than or equal to their respective opposite magnetic guide plates.

Further, the first and second magnet components further has an electromagnetic coil respectively, the electromagnetic coils is positioned between the permanent magnet plates and the magnetic guide plates or between the permanent magnet plates and the corresponding side of the storage assembly, and the electromagnetic coils are internally wound with electromagnetic wire coils along the annular circumference, the electromagnetic wire coils, when electrified, generate an electromagnetic field that superimposes with the permanent magnetic field of the corresponding permanent magnet plates.

Further, the size of the electromagnetic coils is smaller than or equal to the size of their respective opposite permanent magnet plates, and the centers of the permanent magnet plate, the magnetic guide plate, and the electromagnetic coil of the first magnet component are aligned with each other, the centers of the permanent magnet plate, the magnetic guide plate, and the electromagnetic coil of the second magnet component are aligned with each other.

Further, the first magnet component is positioned on a top wall of the storage assembly, and the second magnet component is positioned on a bottom wall of the storage assembly, and the sizes of the first and second magnet components are substantially the same.

Further, the magnetic field directions of the first and second magnet components are set to be the same, thereby making the magnetic field direction inside the storage space from top to bottom or from bottom to top.

Further, the magnetically conductive connection member comprises:
a first connecting segment, extending from the middle of one lateral side of the first magnet component along one side wall of the storage space to the middle of the corresponding side of the second magnet component;
a second connecting segment, extending from the middle of the other lateral side of the first magnet component along the other side wall of the storage space to the middle of the other side of the second magnet component, and
the width of the first and second connecting segments along a front-to-back depth direction being one-half to one-tenth of the length of the magnetically conductive assembly in the front-to-back depth direction.

Further, the storage assembly comprises:
a cylindrical body having a forward opening; and
a drawer, slidably positioned in the cylindrical body, and forming the storage space therein.

The present invention is further directed to a refrigerator comprising:
a cabinet defining a storage compartment;
the aforementioned magnetic field-based fresh-keeping storage container positioned inside the storage compartment.

The magnetic field-based fresh-keeping storage container of the present invention uses a magnet assembly to create a magnetic field within the storage space. The magnetic field helps improve storage quality by shortening freezing time, reducing the rate of juice and nutrient loss in food, decreasing the number of microbes and bacteria, and extending the preservation period. A magnetically conductive assembly forms an annular magnetic conduction path outside the storage space, using a first magnetic conduction component, a second magnetic conduction component, and a magnetic conduction connecting component. This ensures the formation of a uniform and sufficiently strong magnetic field within the storage space to meet storage quality requirements.

Furthermore, the magnetic field-based fresh-keeping storage container of this invention is equipped with permanent magnet plates in the first and second magnet components. The permanent magnetic field of the permanent magnet plates serves as the base magnetic field of the storage space. The magnetic guide plates, set close to the permanent magnet plates, converge the magnetic field of the permanent magnet plates. This prevents the leakage of the magnetic field outside and enhances the magnetic flux density within the storage space, thus improving magnetic field utilization efficiency.

Additionally, the magnetic field-based fresh-keeping storage container of this invention can also be equipped with electromagnetic coils. When electrified, the electromagnetic wire coil wound within the electromagnetic coil generates an electromagnetic field that superimposes with the corresponding permanent magnet plate's magnetic field. This combination of the electromagnetic and permanent magnetic fields not only enhances the magnetic flux density within the storage space, making the magnetic field distribution more uniform and better for preserving food, but also allows for the adjustment of the electromagnetic field to meet the storage requirements of different storage subjects.

Moreover, the magnetic field-based fresh-keeping storage container of this invention, through improvements in the construction of the magnet assembly and magnetically conductive assembly, features a more compact structure. It is particularly suitable for storage boxes and drawers, achieving magnetic field preservation in relatively flat storage spaces.

Furthermore, the refrigerator of the present invention is equipped with the aforementioned magnetic field-based fresh-keeping storage container. This allows food items to be stored in a magnetic field environment, inhibiting the growth of ice crystal nuclei. The rate of ice crystal growth exceeds the migration rate of water molecules, resulting in smaller ice crystals and thus minimizing damage to cells, preventing juice loss, ensuring better taste of the food items, and improving the quality of frozen storage. This meets users' quality requirements for storing valuable food items.

Lastly, the refrigerator of this invention, by improving storage quality through the magnetic field, can provide a new preservation function for smart refrigerators. This aligns with the increasing user demand for smart refrigerators and further meets the user expectations for quality in smart homes and intelligent living.

The above and other objects, advantages and features of the present invention will become more apparent to those skilled in the art from the following detailed description of specific embodiments thereof taken in conjunction with the accompanying drawings.

### BRIEF DESCRIPTION OF THE DRAWINGS

Some specific embodiments of the invention will be described in detail hereinafter by way of example and not by way of limitation with reference to the accompanying drawings. The same reference numerals identify the same or similar components or parts in the drawings. Those skilled in the art should appreciate that the drawings are not necessarily drawn to scale. In the drawings:
FIG. 1 is a schematic perspective view of a refrigerator with a magnetic field-based fresh-keeping storage container according to an embodiment of the present invention;
FIG. 2 is a schematic diagram of a magnetic field-based fresh-keeping storage container according to an embodiment of the present invention;
FIG. 3 is an exploded view of the components of the magnetic field-based fresh-keeping storage container shown in FIG. 2;
FIG. 4 is a schematic diagram showing the coordination between the magnet assembly and the magnetically conductive assembly in the magnetic field-based fresh-keeping storage container of FIG. 2;
FIG. 5 is a schematic diagram of the magnetic field orientation in the magnetic field-based fresh-keeping storage container of FIG. 2;
FIG. 6 is a schematic diagram of the magnetic field orientation in a magnetic field-based fresh-keeping storage container according to another embodiment of the present invention;
FIG. 7 is a schematic diagram showing the coordination between the magnet assembly and the magnetically conductive assembly in the magnetic field-based fresh-keeping storage container described in FIG. 6;
FIG. 8 is a schematic diagram of a magnetic field-based fresh-keeping storage container according to yet another embodiment of the present invention;
FIG. 9 is an exploded view of the components of the magnetic field-based fresh-keeping storage container shown in FIG. 8;
FIG. 10 is a schematic diagram showing the coordination between the magnet assembly and the magnetically conductive assembly in the magnetic field-based fresh-keeping storage container of FIG. 8;
FIG. 11 is a schematic diagram of the magnetic field orientation in the magnetic field-based fresh-keeping storage container of FIG. 8;
FIG. 12 is a schematic diagram of the magnetic field orientation in a magnetic field-based fresh-keeping storage container according to another embodiment of the present invention;
FIG. 13 is a schematic diagram showing the coordination between the magnet assembly and the magnetically conductive assembly in the magnetic field-based fresh-keeping storage container described in FIG. 12; and
FIG. 14 is a block diagram of a control system for the refrigerator with the magnetic field-based fresh-keeping storage container according to an embodiment of the present invention.

### DETAILED DESCRIPTION

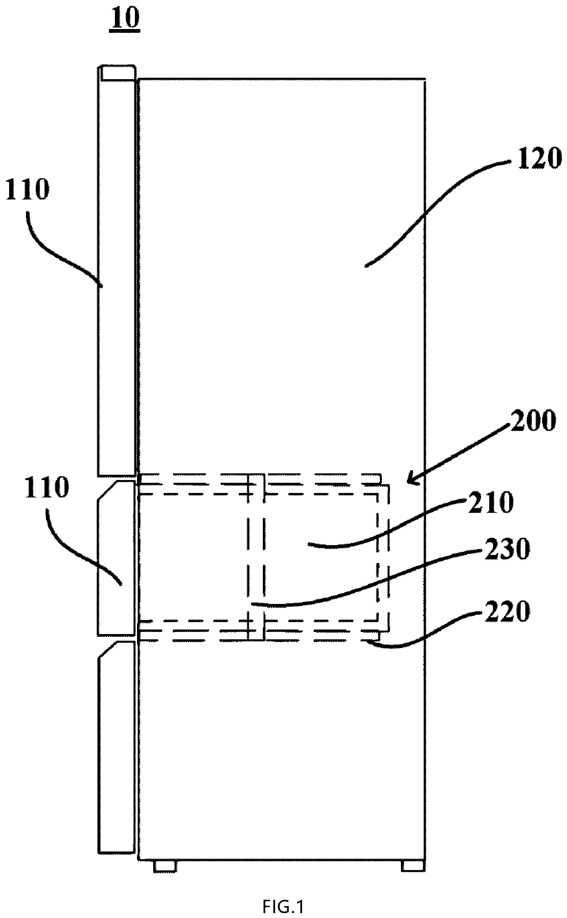

FIG. 1 illustrates a schematic perspective view of a refrigerator 10 with a magnetic field-based fresh-keeping storage container 200 according to an embodiment of the present invention. Generally, the refrigerator 10 of the present embodiment comprises a cabinet 120, a door 110, and a refrigeration system (not shown). The cabinet 120 defines at least one storage compartment with an open front side, typically multiple chambers such as refrigerating storage compartments, freezing storage compartments, variable temperature storage compartments, etc. The number and functionality of specific storage compartments can be configured according to predetermined requirements.

The refrigerator 10 according to the present embodiment can be configured as an air-cooled refrigerator, an air path system is provided in the cabinet 120, and by a fan, refrigerating airflow subjected to heat exchange by a heat exchanger (evaporator) is fed to the storage compartment through an air supply port, and then returned to an air duct through an air return port. Refrigeration is realized. Since the cabinet 120, the door 110, and the refrigerating system of such a refrigerator are well known and easily implemented by those skilled in the art, in order to avoid covering and obscuring invention points of the present application, the cabinet 120, the door 110, and the refrigerating system are not repeated hereinafter.

One or more storage compartments inside the refrigerator 10 can be equipped with a magnetic field-based fresh-keeping storage container 200. When placed in the freezing storage compartment, the magnetic field-based fresh-keeping storage container 200 can be configured to perform freezing freshness retaining on frozen food materials, and growth of ice crystal nuclei is inhibited, such that a growth rate of ice crystals is higher than a migration rate of water molecules, and the generated ice crystals are smaller, thereby reducing damage to cells, avoiding juice loss, accelerating a freezing process and shortening a freezing time. When used for the refrigerating storage compartment, the magnetic field-based fresh-keeping storage container 200 can reduce a speed of an oxidation-reduction reaction of the food materials, reduce loss of nutrition and water, prevent the food materials from discoloring, inhibit bacteria from breeding and prolong a freshness retaining period of the food materials. The magnetic field-based fresh-keeping storage container 200 can be positioned in the refrigerating storage compartment, freezing storage compartment, variable temperature storage compartment, or can be an independent chamber in the refrigerator 10.

The number of the magnetic field-based fresh-keeping storage containers 200 and a type of the storage compartment where the magnetic field-based fresh-keeping storage containers can be arranged can be configured according to needs of users. For example, one or more magnetic field-based fresh-keeping storage containers 200 can be provided in the refrigerator 10.

The magnetic field-based fresh-keeping storage container 200 generally comprises a storage assembly 210, a magnet assembly 220, and a magnetically conductive assembly 230. The storage assembly 210 defines a storage space for placing storage subjects and can be box-shaped. In some embodiments, the storage assembly 210 can be a generally flat rectangular shape (i.e., its height is significantly less than its depth and width). The storage assembly 210 can be a drawer structure, comprising a cylindrical body with a front opening and a drawer that can be slidably placed inside the cylindrical body. When the drawer is pulled out, it reveals the storage space for easy access to storage subjects. When the drawer is pushed into the cylindrical body, it forms an independent sealed space.

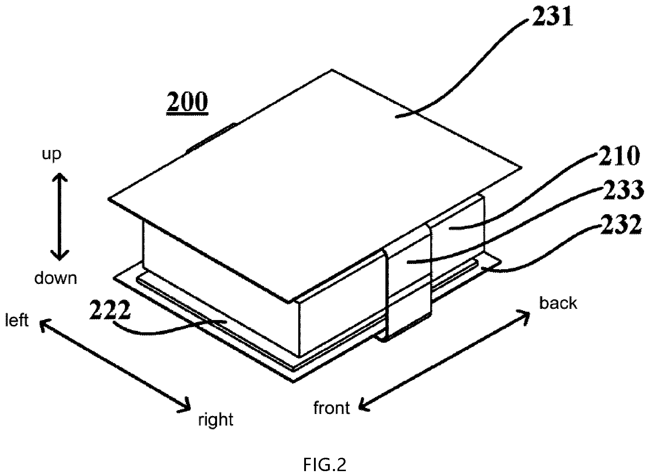

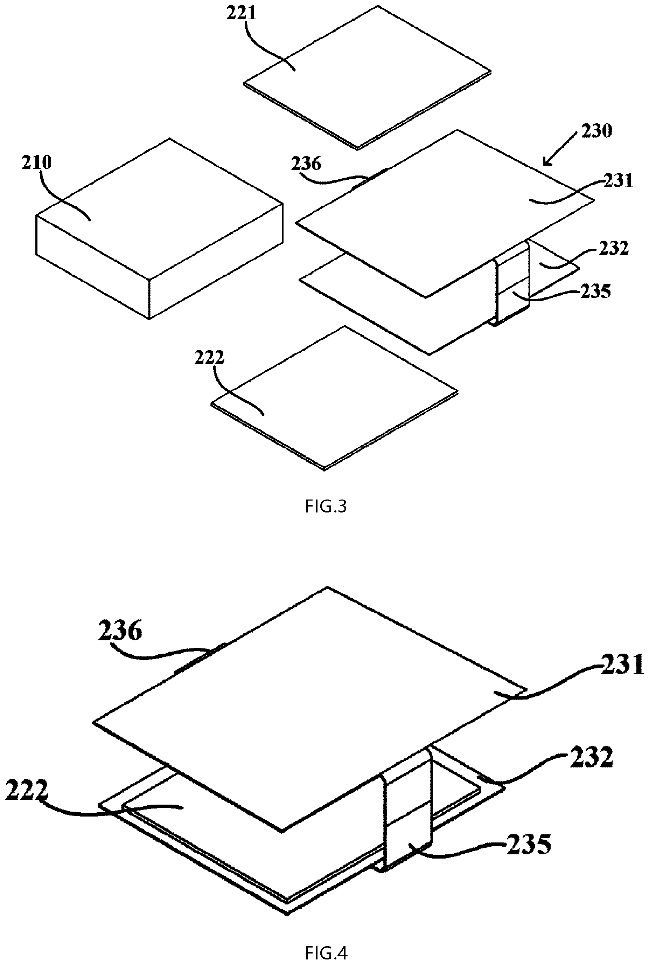

FIG. 2 is a schematic diagram of the magnetic field-based fresh-keeping storage container 200 according to an embodiment of the present invention; FIG. 3 is an exploded view of the magnetic field-based fresh-keeping storage container 200 shown in FIG. 2; FIG. 4 is a schematic diagram showing the coordination between the magnet assembly 220 and the magnetically conductive assembly 230 in the magnetic field-based fresh-keeping storage container 200.

The magnet assembly 220 serves as the source of the magnetic field. The magnet assembly 220 comprises a first magnet component 221 and a second magnet component 222 disposed on a pair of opposite sides of the storage assembly 210, the first and second magnet components 221, 222 are utilized to form a magnetic field in the storage space. The opposite sides where the first and second magnet components 221, 222 are located can be selected based on the shape of the storage assembly 210 and its position inside the refrigerator 10, for example, on the lateral, up-and-down, or front-and-back sides of the storage assembly 210. The magnetic pole directions of both the first magnet component 221 and the second magnet component 222 face towards the storage space.

In the case when the storage assembly 210 is generally flat, especially in a drawer form, the first magnet component 221 and the second magnet component 222 are preferably placed on the up-and-down sides of the storage assembly 210. The first magnet component 221 is disposed on a top wall of the storage assembly 210, and the second magnet component 222 is disposed on a bottom wall of the storage assembly 210, with the magnetic field running from top to bottom or from bottom to top through the storage space. Such an arrangement can reduce the distance between the first magnet component 221 and the second magnet component 222, thereby enhancing the strength and uniformity of the magnetic field.

The first magnet component 221 and the second magnet component 222 can have substantially the same structure and size, and are positioned based on the construction of their respective side surfaces. Generally, the centers of the first magnet component 221 and the second magnet component 222 are opposite to the centers of their respective side surfaces.

The first magnet component 221 and the second magnet component 222 can each define a permanent magnet plate. The permanent magnet plate is disposed on an outer side of the corresponding side of the storage assembly 210, and its shape is consistent with the shape of its corresponding side surface. For example, when the storage assembly 210 is rectangular, the permanent magnet plate can be rectangular, corresponding to the side surface of the storage assembly 210. In embodiments when the first magnet component 221 is disposed on the top wall and the second magnet component 222 on the bottom wall of the storage assembly 210, the permanent magnet plate of the first magnet component 221 can correspond in shape to the top wall of the storage assembly 210, and the permanent magnet plate of the second magnet component 222 corresponds in shape to the bottom wall of the storage assembly 210.

The permanent magnet plate must ensure a uniform magnetic field formed in all positions within the storage space, meaning every part of the storage space is uniformly within the range of the magnetic field.

The magnetically conductive assembly 230 comprises a first magnetically conductive member 231, a second magnetically conductive member 232, and a magnetically conductive connection member 233. The first magnetically conductive member 231 is correspondingly arranged with the first magnet component 221. The second magnetically conductive member 232 is correspondingly disposed with the second magnet component 222. The magnetically conductive connection member 233 connects between the first magnetically conductive member 231 and the second magnetically conductive member 232. The first magnetically conductive member 231, the second magnetically conductive member 232, and the magnetically conductive connection member 233 form an annular magnetic conduction path outside the storage space.

The magnetically conductive assembly 230 can be made of materials with low coercivity and high magnetic permeability, which can help to concentrate the magnetic field, reduce its release to the exterior, and minimize interference with other components outside the storage assembly 210 (e.g., preventing magnetization of other components). The magnetically conductive assembly 230 can be made of silicon steel sheets or similar materials.

The first magnetically conductive member 231 and the second magnetically conductive member 232 can each comprise a magnetic guide plate, meaning that both the first magnetically conductive member 231 and the second magnetically conductive member 232 can be plate-like structures of magnetic guide plates. The magnetic guide plates are disposed corresponding to the permanent magnet plates, and the magnetically conductive connection member 233 extends from the edge of the magnetic guide plates along an exterior of the storage assembly 210 and connects to the magnetic guide plate on the other side. For example, the magnetic guide plate of the first magnetically conductive member 231 is abutting against the permanent magnet plate of the first magnet component 221, and the magnetic guide plate of the second magnetically conductive member 232 is abutting against the permanent magnet plate of the second magnet component 222. The magnetically conductive assembly 230 can be a single piece, meaning that the first magnetically conductive member 231, the second magnetically conductive member 232, and the magnetically conductive connection member 233 are integrally formed. In other embodiments, the first magnetically conductive member 231, the second magnetically conductive member 232, and the magnetically conductive connection member 233 can also be fixed through welding or adhesion.

In embodiments when the first magnet component 221 is disposed on the top wall of the storage assembly 210 and the second magnet component 222 disposed on the bottom wall, the magnetic guide plate of the first magnetically conductive member 231 is arranged above the permanent magnet plate of the first magnet component 221, while the magnetic guide plate of the second magnetically conductive member 232 is arranged below the permanent magnet plate of the second magnet component 222.

The projection of the storage space on a plane where the magnetic guide plates are located is in the range of the magnetic guide plates, the size of the permanent magnet plates is smaller than or equal to their respective opposite magnetic guide plates. This means the magnetic guide plates can be equal to or slightly larger than the corresponding side of the storage assembly 210. In embodiments when the first magnet component 221 is disposed on the top wall and the second magnet component 222 on the bottom wall of the storage assembly 210, the magnetic guide plate of the first magnetically conductive member 231 covers a top surface of the storage space, and the magnetic guide plate of the second magnetically conductive member 232 covers a bottom surface of the storage space.

The size of the permanent magnet plates can be smaller than the corresponding magnetic guide plates, and they can be aligned with the centers of the magnetic guide plates. The magnetic guide plates can converge the magnetic field of the permanent magnet plates, thereby making it further uniform.

The magnetically conductive connection member 233 connects the magnetic guide plate of the first magnetically conductive member 231 and the magnetic guide plate of the second magnetically conductive member 232. The size of the magnetically conductive connection member 233 can be set based on the state of the magnetic field. The magnetically conductive connection member 233 can be of strip-shaped, and connecting to the middle of one side of the magnetic guide plates.

The magnetically conductive connection member 233 comprises a first connecting segment 235 and a second connecting segment 236. The first connecting segment 235 connects one side of the magnetic guide plate of the first magnetically conductive member 231 and the magnetic guide plate of the second magnetically conductive member 232, while the second connecting segment 236 connects the other side. Viewed in cross-section, the first magnetically conductive member 231, the second magnetically conductive member 232, and the magnetically conductive connection member 233 form a ring around the exterior of the storage assembly 210.

In embodiments when the first magnet component 221 and the second magnet component 222 are respectively arranged on the top wall and the bottom wall of the storage assembly 210, the first connecting segment 235 extends from the middle of one lateral side (e.g., the right side) of the first magnet component 221 along one side wall of the storage space to the middle of the corresponding side (e.g., the right side) of the second magnet component 222; the second connecting segment 236 extends from the middle of the other lateral side (e.g., the left side) of the first magnet component 221 along the other side wall of the storage space to the middle of the other side (e.g., the left side) of the second magnet component 222.

The magnetically conductive connection member 233 can be of strip-shaped, with a width of the first connecting segment 235 and the second connecting segment 236 along a front-to-back depth direction being one-half to one-tenth of a length of the magnetically conductive assembly 230 in the front-to-back depth direction. That is, the magnetically conductive connection member 233 is positioned in the middle of the storage assembly 210 along the front-to-back direction.

The construction of the above magnetically conductive assembly 230 can reduce the use of magnetic materials and magnetic components while meeting the requirements for magnetic field strength, thus saving the cost of the magnetic field-based fresh-keeping storage container 200 and reducing the overall weight of the magnetic field-based fresh-keeping storage container 200 and the refrigerator 10. The range of magnetic field strength can be set in 1Gs to 100Gs. In applications in a freezing environment, the range of magnetic field strength can preferably be in 5Gs to 60Gs, for example, about 20Gs; in applications in a refrigerated environment, the range of magnetic field strength can be in 20Gs to 160Gs, preferably 40Gs to 80Gs, for example, about 60Gs.

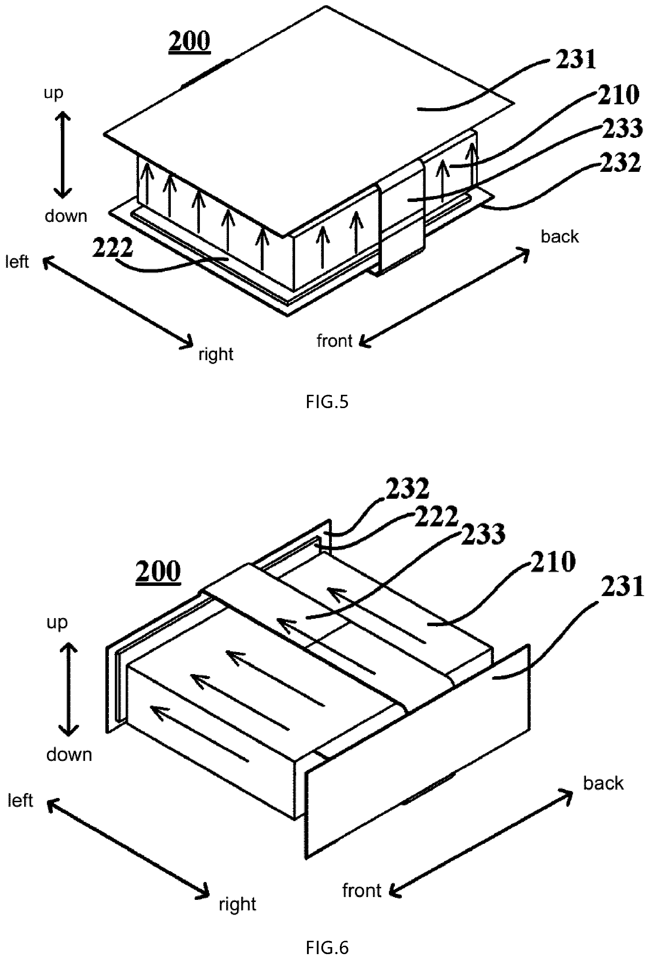

FIG. 5 is a schematic diagram showing the direction of the magnetic field in the magnetic field-based fresh-keeping storage container 200 as depicted in FIG. 2. The magnetic field directions of the first magnet component 221 and the second magnet component 222 are set to be the same, thereby creating a uniform magnetic field within the storage space. This means that the N poles of the permanent magnet plates of both the first magnet component 221 and the second magnet component 222 face in one direction, while the S poles face in the opposite direction. In embodiments when the first magnet component 221 and the second magnet component 222 are respectively arranged on the top and bottom walls of the storage assembly 210, the direction of the magnetic field within the storage space can be from top to bottom or from bottom to top. The magnetic field direction shown in FIG. 5 is from bottom to top. Based on the same technical concept, those skilled in the art can easily adjust the direction of the magnetic poles to achieve the opposite magnetic field direction, that is, from top to bottom.

The permanent magnetic field formed by the aforementioned permanent magnet plates is a static magnetic field, thereby ensuring that the storage space always has a magnetic field of certain strength.

Based on the above explanation for the arrangement of the first magnet component 221 and the second magnet component 222 in an up-and-down orientation, those skilled in the art can easily implement the left-and-right or front-and-back arrangement of the first magnet component 221 and the second magnet component 222 in storage assemblys 210 of other shapes.

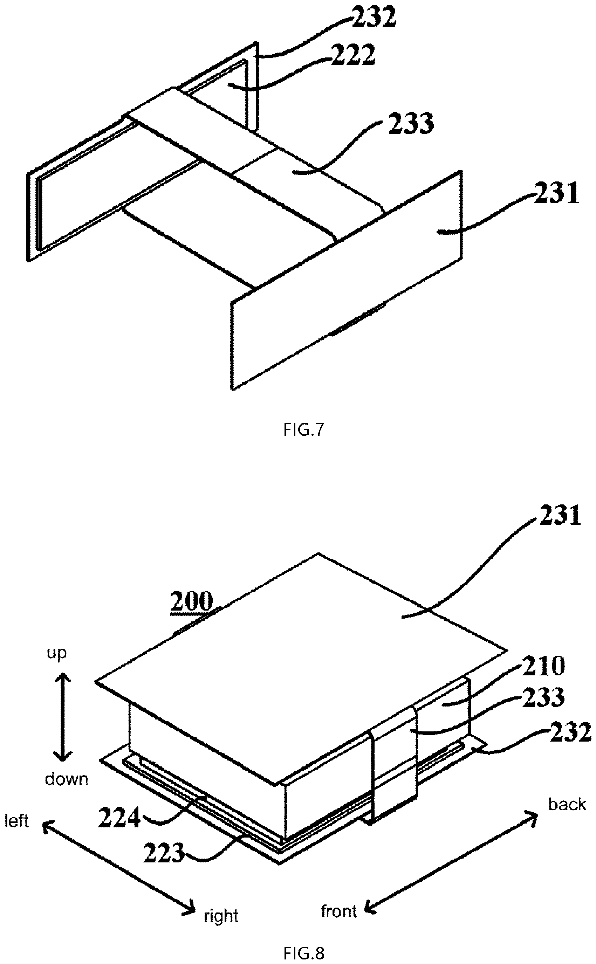

FIG. 6 shows the magnetic field direction of the magnetic field-based fresh-keeping storage container 200 according to another embodiment, and FIG. 7 is a schematic diagram showing the coordination between the magnet assembly 220 and the magnetically conductive assembly 230 in the magnetic field-based fresh-keeping storage container 200 shown in FIG. 6. In this embodiment, the first magnet component 221 and the second magnet component 222 are arranged in a left-and-right direction, with the first magnet component 221 (obscured in FIGS. 6 and 7, not shown) positioned on the right side of the storage assembly 210; the second magnet component 222 is positioned on the left side. Accordingly, the magnetic guide plate of the first magnetically conductive member 231 is located on the right side of the first magnet component 221, and the second magnetically conductive member 232 is on the left side of the second magnet component 222. The magnetically conductive connection member 233 connects the first and second magnetically conductive members 231 and 232 from the centers of the top and bottom of the storage assembly 210. The direction of the magnetic field shown in FIG. 6 is from right to left. Based on the same technical concept, those skilled in the art can easily adjust the direction of the magnetic poles to achieve the opposite magnetic field direction, that is, from left to right.

Similarly, those skilled in the art should be able to implement embodiments when the first magnet component 221 and the second magnet component 222 are arranged in a front-and-back orientation.

To further enhance the magnetic field strength and make it adjustable, this embodiment further provides a magnetic field-based fresh-keeping storage container 200 capable of generating an electromagnetic field that works in conjunction with the permanent magnetic field.

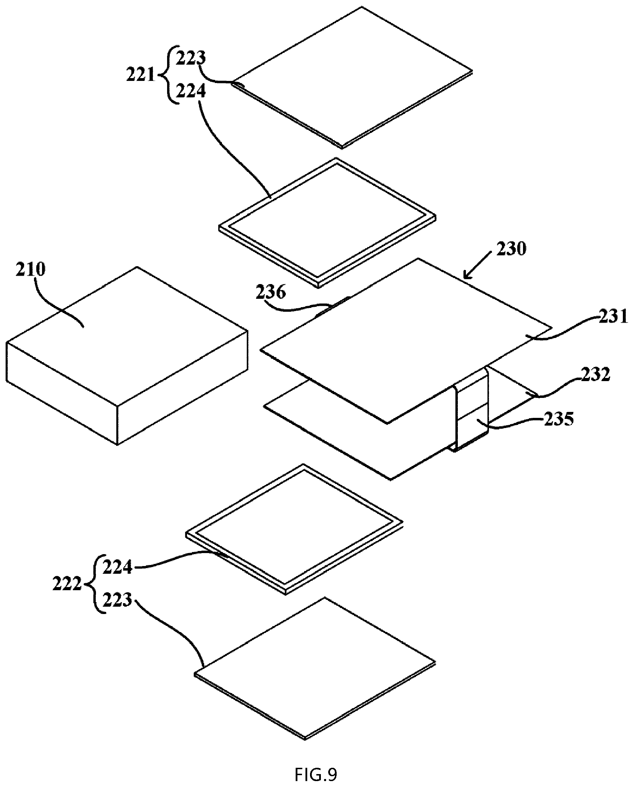

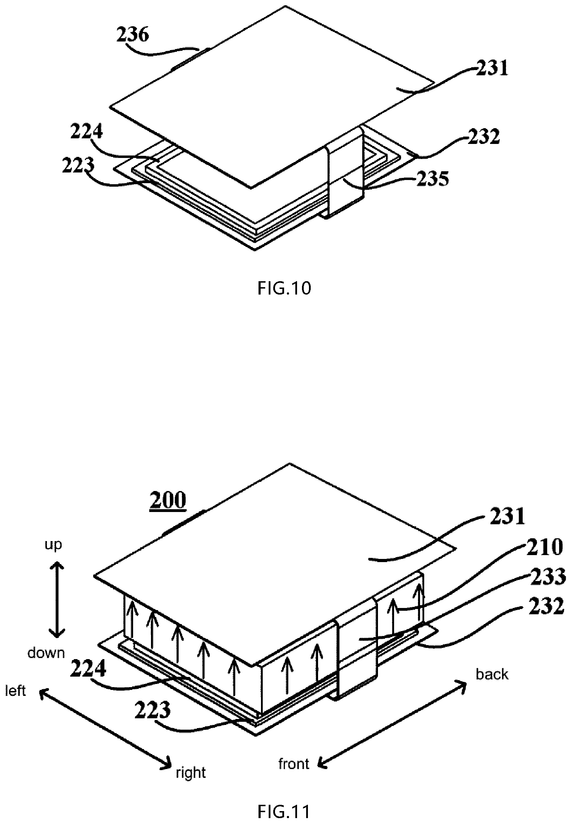

FIG. 8 is a schematic diagram of the magnetic field-based fresh-keeping storage container 200 according to another embodiment of this invention; FIG. 9 is an exploded view of the magnetic field-based fresh-keeping storage container 200 as shown in FIG. 8; FIG. 10 is a schematic diagram showing the coordination between the magnet assembly 220 and the magnetically conductive assembly 230 in the magnetic field-based fresh-keeping storage container 200 of FIG. 8.

In this embodiment, the first magnet component 221 and the second magnet component 222, in addition to the permanent magnet plates 223, further comprise electromagnetic coils 224. The permanent magnet plates 223 are still positioned on the outer side of the corresponding side surface of the storage assembly 210, and their shape is consistent with the shape of their corresponding side.

The magnetic guide plates of the first magnetically conductive member 231 and the second magnetically conductive member 232 are respectively disposed opposite to the permanent magnet plates 223, and the magnetically conductive connection member 233 extends from the edge of the magnetic guide plates along the exterior of the storage assembly 210 and connects to the magnetic guide plate on the other side.

The projection of the storage space on the plane of the magnetic guide plates is within the range of the magnetic guide plates, with the size of the permanent magnet plates 223 being smaller than or equal to their respective opposite magnetic guide plates. This means the magnetic guide plates can be equal to or slightly larger than the corresponding side of the storage assembly 210. In embodiments when the first magnet component 221 is set on the top wall and the second magnet component 222 on the bottom wall of the storage assembly 210, the magnetic guide plate of the first magnetically conductive member 231 covers the top surface of the storage space, while the magnetic guide plate of the second magnetically conductive member 232 covers the bottom surface.

The size of the permanent magnet plates 223 can be smaller than the corresponding magnetic guide plates and aligned with the centers of the magnetic guide plates, meaning the permanent magnet plates 223 can be positioned abutting against the central area of the magnetic guide plates. The magnetic guide plates can concentrate the magnetic field of the permanent magnet plates 223, thereby making it more uniform.

Both the first magnet component 221 and the second magnet component 222 are additionally equipped with electromagnetic coils 224. The electromagnetic coils 224 are positioned either between the permanent magnet plates 223 and the magnetic guide plates or between the permanent magnet plates 223 and the corresponding side surface of the storage assembly. The electromagnetic coils 224 are wound internally along the annular circumference with electromagnetic wire coils. When electrified, these electromagnetic wire coils generate an electromagnetic field that superimposes with the permanent magnetic field of the corresponding permanent magnet plates 223.

An outer contour of the electromagnetic coils 224 can be generally consistent with or slightly smaller than a contour of the permanent magnet plates 223, that is to say, the size of the electromagnetic coil 224 is smaller than or equal to the size of corresponding permanent magnet plate 223.

The centers of the permanent magnet plates 223, magnetic guide plates, and electromagnetic coils 224 align with each other, that is to say, the magnetic guide plates can cover the permanent magnet plates 223 and electromagnetic coils 224, thereby expanding the magnetic field coverage space within the storage space and making the magnetic field more uniform there.

The number of turns of the electromagnetic wire coil inside the electromagnetic coils 224 can be set according to the required magnetic field strength. The direction of the electromagnetic field formed by the electromagnetic coils 224 can be set to be consistent with the direction of the permanent magnetic field of the permanent magnet plates 223. In this embodiment, the magnetic guide plates can also concentrate the electromagnetic field, thereby enhancing the uniformity of the magnetic field within the storage space.

Through the control of the electromagnetic coils, the electromagnetic field can be set as needed to be a static magnetic field with constant magnetic field direction and/or strength, an alternating magnetic field with changing magnetic field direction and/or strength, or an intermittently activated pulsed magnetic field. These magnetic field adjustments can be achieved by regulating the current flowing to the electromagnetic coils. In some embodiments, the electromagnetic field can be adjusted according to the storage environment within the storage space and the storage state of the storage subjects. When the electromagnetic field is not activated, the permanent magnetic field from the permanent magnet plates 223 maintains the basic magnetic field strength.

Taking a flat drawer structure as an example for the storage assembly 210, the arrangement of the first magnet component 221 and the second magnet component 222 in the up-and-down orientation is introduced. Those skilled in the art can easily implement the left-and-right or front-and-back arrangements of the first magnet component 221 and the second magnet component 222 based on this foundation.

The first magnet component 221 is set on the top wall of the storage assembly 210, and the second magnet component 222 on the bottom wall, both having generally the same structure and size. The permanent magnet plate 223 of the first magnet component 221 is consistent with the shape of the top wall of the storage assembly 210, and the permanent magnet plate 223 of the second magnet component 222 can be consistent with the shape of the bottom wall of the storage assembly 210. The size of the magnetic guide plates can be generally consistent with the size of the corresponding side surface of the storage assembly 210.

The magnetic guide plate of the first magnetically conductive member 231 is arranged above the permanent magnet plate 223 of the first magnet component 221, while the magnetic guide plate of the second magnetically conductive member 232 is arranged below the permanent magnet plate 223 of the second magnet component 222. The size of the magnetic guide plates is greater than or equal to the permanent magnet plates 223 and is abutting against the central area of the permanent magnet plates 223.

The electromagnetic coil 224 of the first magnet component 221 can be interposed between the magnetic guide plate of the first magnetically conductive member 231 and the permanent magnet plate 223, or between the permanent magnet plate 223 and the top wall of the storage assembly 210. The electromagnetic coil 224 of the second magnet component 222 can be interposed between the magnetic guide plate of the second magnetically conductive member 232 and the permanent magnet plate 223, or between the permanent magnet plate 223 and the bottom wall of the storage assembly 210. The magnetic guide plate of the first magnetically conductive member 231 can uniformly distribute the magnetic field of the electromagnetic coil 224 of the first magnet component 221, and the magnetic guide plate of the second magnetically conductive member 232 can uniformly distribute the magnetic field of the electromagnetic coil 224 of the second magnet component 222, thereby forming a uniform magnetic field within the storage space.

The first connecting segment 235 extends from the middle of one lateral side (e.g., the right side) of the first magnet component 221 along one side wall of the storage space to the middle of the corresponding side (e.g., the right side) of the second magnet component 222; the second connecting segment 236 extends from the middle of the other lateral side (e.g., the left side) of the first magnet component 221 along the other side wall of the storage space to the middle of the other side (e.g., the left side) of the second magnet component 222.

The first and second connecting segments 235, 236 can extend from the central area of the side end face of the magnetic guide plates along the exterior of the storage assembly 210.

The magnetically conductive connection member 233 can be of strip-shaped, with its size sufficient to form a magnetic conduction path, thereby saving on magnetic material use, reducing costs, and also decreasing weight.

The direction of the electromagnetic field can be set to be consistent with the direction of the permanent magnetic field, thus achieving the superposition of magnetic fields and enhancing the magnetic field strength. FIG. 11 is a schematic diagram showing the magnetic field direction in the magnetic field-based fresh-keeping storage container 200 as shown in FIG. 8. The magnetic field directions of the electromagnetic field of the first magnet component 221 and the second magnet component 222 and the magnetic field direction of the permanent magnetic field are same, thereby creating a uniform magnetic field within the storage space. The direction of the magnetic field within the storage space can be from top to bottom or from bottom to top. The magnetic field direction shown in FIG. 11 is from bottom to top, and based on the same technical concept, those skilled in the art can easily achieve the opposite magnetic field direction, that is, from top to bottom.

The magnetically conductive assembly 230 can not only improve the uniformity of the magnetic field but also guide the magnetic field outside the storage space, thereby preventing the magnetic field from affecting other components outside the storage assembly 210.

The coordinated structure of the permanent magnet plates 223, magnetic guide plates, electromagnetic coils 224, and magnetically conductive connection members 233 has been optimized and improved to make the structure compact, save space, facilitate assembly onto the storage assembly 210, and be beneficial for use in the refrigerator 10.

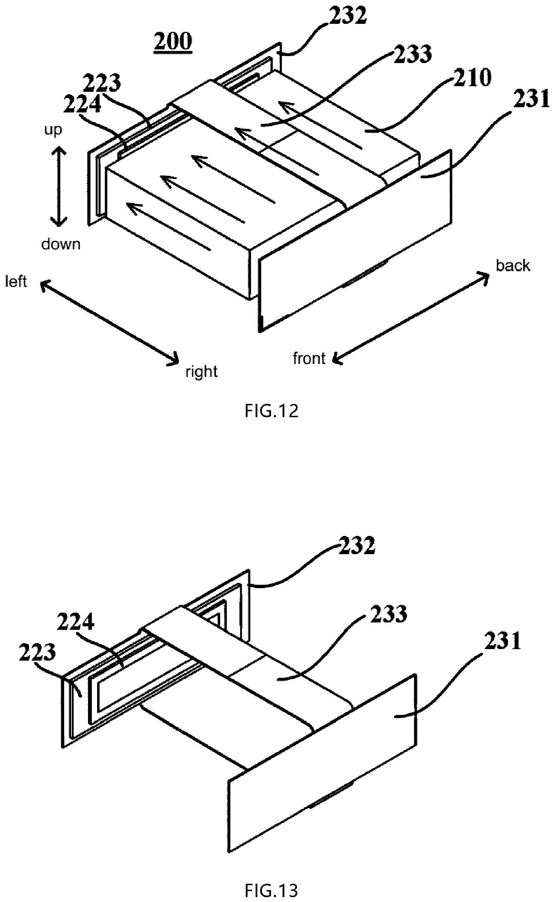

FIG. 12 shows the magnetic field direction in the magnetic field-based fresh-keeping storage container 200 according to another embodiment, and FIG. 13 is a schematic diagram showing the coordination between the magnet assembly 220 and the magnetically conductive assembly 230 in the magnetic field-based fresh-keeping storage container 200 as shown in FIG. 12. In this embodiment, the first magnet component 221 and the second magnet component 222 are arranged on left and right sides, each one of the first magnet component 221 and the second magnet component 222 comprises one electromagnetic coil 224 and one permanent magnet plate 223. The first magnet component 221 (obscured in FIGS. 12 and 13, not shown) is positioned on the right side of the storage assembly 210; the second magnet component 222 is positioned on the left side. Accordingly, the magnetic guide plate of the first magnetically conductive member 231 is located on the right side of the first magnet component 221, and the magnetic guide plate of the second magnetically conductive member 232 is on the left side of the second magnet component 222. The magnetically conductive connection member 233 connects the first and second magnetically conductive members 231 and 232 from the center of the top and bottom of the storage assembly 210. The magnetic field direction shown in FIG. 12 is from right to left, and based on the same technical concept, those skilled in the art can easily achieve the opposite magnetic field direction, that is, from left to right.

Similarly, those skilled in the art should be able to implement embodiments where the first magnet component 221 and the second magnet component 222 are arranged in the front-and-back orientation.

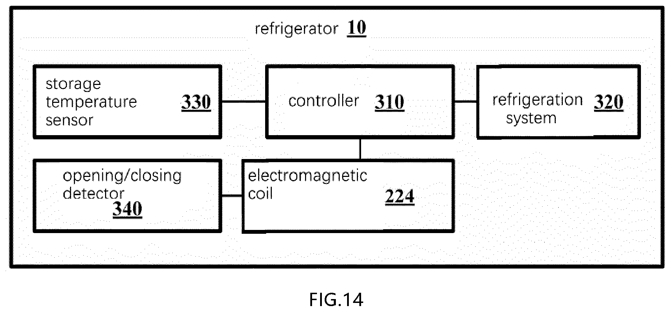

FIG. 14 is a block diagram of a control system for the refrigerator 10 having the magnetic field-based fresh-keeping storage container 200 according to an embodiment of this invention. The refrigerator 10 of the present embodiment can further combine magnetic field control with refrigeration control to ensure that food is frozen in a magnetic field environment, thereby achieving the effect of preservative freezing.

The refrigerator 10 can optionally include one or more of a storage temperature sensor 330, an opening/closing detector 340, and a refrigeration controller 310. The storage temperature sensor 330 is used to detect the storage temperature in the storage space, while the opening/closing detector 340 is used to detect the open/close status of the storage space.

When the opening/closing detector 340 detects that the storage space is opened, the storage temperature sensor 330 can detect whether new food items are placed or whether the original food items need to be refrozen. During the refrigeration process, the electromagnetic coils 224 and the refrigeration system 320 work together to achieve magnetically assisted freezing, enhancing the freezing and preservation effect of the food items.

The controller 310 is used to control the electromagnetic coils 224 and the refrigeration system 320, thereby implementing the corresponding refrigeration and magnetic field control. Various sensors (including the storage temperature sensor 330 and opening/closing detector 340) provide detection methods for the above control, thus meeting the control requirements of the control method.

The controller 310 can be configured to control the generation of the electromagnetic field by the electromagnetic coils 224 based on the temperature of the storage space and the operating state of the refrigerator 10, such as a static magnetic field with constant magnetic field direction and/or strength, an alternating magnetic field with changing magnetic field direction and/or strength, or an intermittently activated pulsed magnetic field. Considering that the magnetic field has a greater effect on the specific storage stage of the storage subjects, the controller 310 can activate the electromagnetic field when a stronger magnetic field is needed; during normal storage, the permanent magnetic field maintains the basic magnetic field strength.

For example, when auxiliary freezing storage is realized by the magnetic field, the controller 310 can be configured to activate the electromagnetic field when a new storage subject is put into the storage space and the storage temperature is within a set temperature threshold range. The temperature threshold range can be set according to a temperature during crystallization in a freezing process, such that the magnetic field intensity is increased in a process of completing crystallization. In addition, in a normal storage process, the magnetic field is kept at a certain intensity to magnetize the storage subject. With the above control mode, the storage subject can be frozen in a high-intensity magnetic field environment, the growth of the ice crystal nuclei is preferentially suppressed, the damage to the cells is reduced, the juice loss is avoided, the better taste of the food material is guaranteed, the freezing storage quality is improved, and the requirement of the user for the storage quality of a precious food material is met.

So far, it should be appreciated by those skilled in the art that while various exemplary embodiments of the invention have been shown and described in detail herein, many other variations or modifications which are consistent with the principles of this invention may be determined or derived directly from the disclosure of the present invention without departing from the spirit and scope of the invention. Accordingly, the scope of the invention should be understood and interpreted to cover all such other variations or modifications.

## Claims

1. A magnetic field-based fresh-keeping storage container, comprising:
a storage assembly defining a storage space for placing storage subjects;
a magnet assembly having a first magnet component and a second magnet component respectively positioned on a pair of opposite sides of the storage assembly, the first and second magnet components being utilized to form a magnetic field in the storage space;
a magnetically conductive assembly, having a first magnetically conductive member correspondingly arranged with the first magnet component, a second magnetically conductive member correspondingly arranged with the second magnet component, and a magnetically conductive connection member connecting between the first and second magnetically conductive members, forming an annular magnetic conduction path outside the storage space with the first magnetically conductive member, the second magnetically conductive member, and the magnetically conductive connection member.

2. The magnetic field-based fresh-keeping storage container according to claim 1, wherein the first and second magnet components each comprises a permanent magnet plate positioned on an exterior side of the corresponding side of the storage assembly, and the shape of the permanent magnet plate is consistent with the shape of its corresponding side; the first and second magnetically conductive members each comprises a magnetic guide plate, respectively set opposite to the permanent magnet plates, and the magnetically conductive connection member extends from the edge of the magnetic guide plate along the exterior of the storage assembly and connects to the magnetic guide plate on the other side.

3. The magnetic field-based fresh-keeping storage container according to claim 2, wherein the projection of the storage space on the plane of the magnetic guide plates lies within the range of the magnetic guide plates, and the size of the permanent magnet plates is smaller than or equal to their respective opposite magnetic guide plates.

4. The magnetic field-based fresh-keeping storage container according to claim 3, wherein the first and second magnet components further has an electromagnetic coil respectively, the electromagnetic coils is positioned between the permanent magnet plates and the magnetic guide plates or between the permanent magnet plates and the corresponding side of the storage assembly, and the electromagnetic coils are internally wound with electromagnetic wire coils along the annular circumference, the electromagnetic wire coils, when electrified, generate an electromagnetic field that superimposes with the permanent magnetic field of the corresponding permanent magnet plates.

5. The magnetic field-based fresh-keeping storage container according to claim 4, wherein the size of the electromagnetic coils is smaller than or equal to the size of their respective opposite permanent magnet plates, and the centers of the permanent magnet plate, the magnetic guide plate, and the electromagnetic coil of the first magnet component are aligned with each other, the centers of the permanent magnet plate, the magnetic guide plate, and the electromagnetic coil of the second magnet component are aligned with each other.

6. The magnetic field-based fresh-keeping storage container according to any one of claims 1-5, wherein the first magnet component is positioned on a top wall of the storage assembly, and the second magnet component is positioned on a bottom wall of the storage assembly, and the sizes of the first and second magnet components are substantially the same.

7. The magnetic field-based fresh-keeping storage container according to claim 6, wherein the magnetic field directions of the first and second magnet components are set to be the same, thereby making the magnetic field direction inside the storage space from top to bottom or from bottom to top.

8. The magnetic field-based fresh-keeping storage container according to claim 6, wherein the magnetically conductive connection member comprises:
a first connecting segment, extending from the middle of one lateral side of the first magnet component along one side wall of the storage space to the middle of the corresponding side of the second magnet component;
a second connecting segment, extending from the middle of the other lateral side of the first magnet component along the other side wall of the storage space to the middle of the other side of the second magnet component, and
the width of the first and second connecting segments along a front-to-back depth direction being one-half to one-tenth of the length of the magnetically conductive assembly in the front-to-back depth direction.

9. The magnetic field-based fresh-keeping storage container according to any one of claims 1-5, wherein the storage assembly comprises:
a cylindrical body having a forward opening; and
a drawer, slidably positioned in the cylindrical body, and forming the storage space therein.

10. A refrigerator, comprising:
a cabinet defining a storage compartment;
a magnetic field-based fresh-keeping storage container according to any one of claims 1 to 9 positioned inside the storage compartment.
